# EUROPEAN PATENT APPLICATION

(11) **EP 4 678 378 A1**
(43) Date of publication of application: **14.01.2026**
(21) Application number: 23935441.8
(22) Date of filing: 04.12.2023
(51) Int. Cl.: B29C 55/20, B29C 55/16

(54) **LINK MECHANISM FOR MEMBRANE DRAWING DEVICE, MEMBRANE DRAWING DEVICE, AND ROLLER HOLDER FOR HOLDING ROLLER OF LINK MECHANISM**

(30) Priority: 24.04.2023 JP 2023071050
(71) Applicant: The Japan Steel Works, Ltd., Tokyo 141-0032 (JP)
(72) Inventor: KATO, Masaki, Tokyo 141-0032 (JP); NAKAJIMA, Ichiro, Tokyo 141-0032 (JP)
(74) Representative: Simmons & Simmons LLP (Munich)
(86) International application number: PCT/JP2023/043248
(87) International publication number: WO 2024/224670

(57) **Abstract**

A roller holder 60 for holding a roller of a link mechanism according to one embodiment includes a part 61 to be housed in a roller housing portion of the link mechanism and a part 62 exposed to the outside of the roller housing portion. In plan view, the part 62 of the roller holder 60 includes a protruding portion 62P1 that protrudes to the outside of the part 61 and a protruding portion 62P2 on an opposite side of the protruding portion 62P1. A hardness of each of a side surface 60s1 of the protruding portion 62P1 and a side surface 60s2 of the protruding portion 62P2 is greater than a hardness of the part 61 of the roller holder 60.

## Description

### TECHNICAL FIELD

The present invention relates to a link mechanism for a stretching apparatus, a stretching apparatus, and a roller holder for holding a roller of a link mechanism.

### BACKGROUND ART

A stretching apparatus configured to stretch a sheet, a film, or the like in a longitudinal direction and a transverse direction while conveying it has been known. For example, Patent Document 1 (Japanese Unexamined Patent Application Publication No. 2012-121259) discloses a simultaneous biaxial stretching apparatus in which longitudinal stretching and transverse stretching of a sheet-like material are performed simultaneously. The simultaneous biaxial stretching apparatus disclosed in Patent Document 1 includes a plurality of link mechanisms coupled like a folding ruler.

### RELATED ART DOCUMENTS

### PATENT DOCUMENTS

Patent Document 1: Japanese Unexamined Patent Application Publication No. 2012-121259

### SUMMARY OF THE INVENTION

### PROBLEMS TO BE SOLVED BY THE INVENTION

From the viewpoint of improving the performance of a stretching apparatus, it is preferable to improve the durability of a link mechanism.

Other objects and novel features will be apparent from the description of this specification and the accompanying drawings.

### MEANS FOR SOLVING THE PROBLEMS

A roller holder for holding a roller of a link mechanism according to one embodiment includes a first part to be housed in a roller housing portion of the link mechanism and a second part exposed to the outside of the roller housing portion. In plan view, the second part of the roller holder includes a first protruding portion that protrudes to the outside of the first part and a second protruding portion on an opposite side of the first protruding portion. A hardness of each of a side surface of the first protruding portion and a side surface of the second protruding portion is greater than a hardness of the first part of the roller holder.

### EFFECTS OF THE INVENTION

According to one embodiment, it is possible to improve the performance of a stretching apparatus.

### BRIEF DESCRIPTIONS OF THE DRAWINGS

[FIG. 1] is a schematic view showing a configuration of a thin-film manufacturing system according to an embodiment.
[FIG. 2] is a plan view showing an example of a structure of the stretching apparatus shown in FIG. 1.
[FIG. 3] is a plan view showing a plurality of link mechanisms in a closed state.
[FIG. 4] is a plan view showing the plurality of link mechanisms in an open state.
[FIG. 5] is a top perspective view showing a part of the plurality of link mechanisms.
[FIG. 6] is a bottom perspective view showing a part of the plurality of link mechanisms.
[FIG. 7] is a side view of the link mechanism.
[FIG. 8] is a transparent plan view of one of the two roller holders shown in FIG. 7 and an upper roller held by the roller holder.
[FIG. 9] is a cross-sectional view taken along the line A-A in FIG. 8.
[FIG. 10] is a cross-sectional view taken along the line B-B in FIG. 8.
[FIG. 11] is a transparent plan view of the other of the two roller holders shown in FIG. 7 and an upper roller held by the roller holder.
[FIG. 12] is a cross-sectional view taken along the line C-C in FIG. 11.
[FIG. 13] is a cross-sectional view taken along the line D-D in FIG. 11.

### DETAILED DESCRIPTION OF PREFERRED EMBODIMENTS

Hereinafter, embodiments and examples will be described in detail with reference to the drawings. Note that the members having the same function are denoted by the same reference characters in all the drawings for describing the embodiments, and the repetitive description thereof will be omitted.

### <Overall Structure>

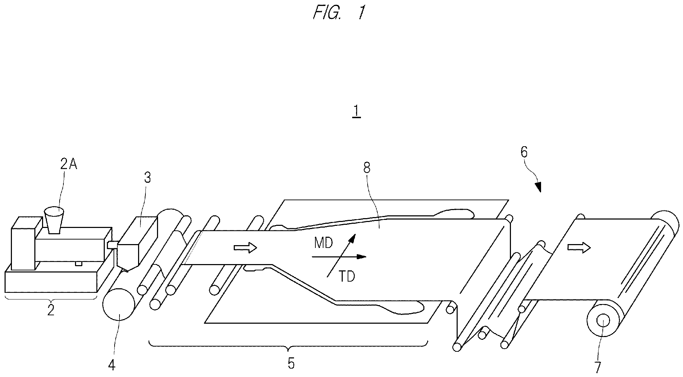

FIG. 1 is a schematic view showing a configuration of a thin-film manufacturing system according to this embodiment. A thin-film manufacturing system 1 shown in FIG. 1 includes an extrusion apparatus (twin-screw kneading extrusion apparatus) 2, a T-die 3, a raw sheet cooling apparatus 4, a stretching apparatus (simultaneous biaxial stretching apparatus) 5, a take-off apparatus 6, and a winder apparatus 7.

In the thin-film manufacturing system 1, a thin film is manufactured through the following process. First, a resin material (pellet) and additives are supplied to a raw material supply unit (raw material input port, hopper) 2A of the kneading extrusion apparatus 2. The raw material to be supplied to the extrusion apparatus 2 is made up of a resin material (for example, thermoplastic resin material in pellet shape), additives, and the like.

The raw material supplied to the extrusion apparatus 2 is conveyed while being kneaded (mixed). For example, the raw material supplied to the extrusion apparatus 2 is melted and kneaded while being sent forward by the rotation of screws in the extrusion apparatus 2.

The raw material kneaded by the extrusion apparatus 2 (kneaded material) is supplied to the T-die 3. The kneaded material supplied to the T-die 3 is extruded toward the raw sheet cooling apparatus 4 through a slit of the T-die 3. The kneaded material supplied from the extrusion apparatus 2 to the T-die 3 is formed into a predetermined shape (in this case, film-like shape) by passing through the T-die 3.

The kneaded material extruded from the T-die 3 is cooled to be a film 8 in the raw sheet cooling apparatus 4. The film 8 is a resin film in a solidified state (solid state). More specifically, the film 8 is, for example, a thermoplastic resin film. The film 8 is continuously extruded from the T-die 3. By continuously extruding the film 8 from the T-die 3, the film 8 is continuously supplied to the stretching apparatus 5.

Focusing on the stretching process of the film by the stretching apparatus 5, the film 8 corresponds to a raw material to be stretched. In this specification, descriptions will be made mainly on the stretching apparatus 5, so a sheet-like material to be supplied to the stretching apparatus 5 and the film 8 before being subjected to the stretching process may be referred to as a raw sheet. On the other hand, the film 8 after the completion of the stretching process and in the state of being discharged from the stretching apparatus 5 may be referred to as a thin film.

The film 8 supplied to the stretching apparatus 5 is stretched in an MD direction and a TD direction by the stretching apparatus 5. The film 8 that has been subjected to the stretching process (stretching treatment) by the stretching apparatus 5 is conveyed to the winder apparatus 7 via the take-off apparatus 6 and is wound by the winder apparatus 7. The film 8 wound by the winder apparatus 7 is cut as needed.

The thin-film manufacturing system 1 shown in FIG. 1 manufactures a thin film through the process described above. Understandably, the thin-film manufacturing system 1 can be modified in various ways in accordance with the properties and the like of the thin film to be manufactured. For example, an extraction tank may be provided near the take-off apparatus 6 shown in FIG. 1, and a plasticizer (for example, paraffin) contained in the film 8 may be removed in some cases.

The stretching apparatus 5 constituting the thin-film manufacturing system 1 stretches the film 8 in the MD direction and the TD direction while conveying the film 8 in the MD direction. The MD (Machine Direction) direction is a conveying direction of the film 8. Also, the TD (Transverse Direction) direction is a direction that intersects with the conveying direction of the film 8.

In the following description, the MD direction is referred to as a "conveying direction" or a "longitudinal direction", and the TD direction is referred to as a "transverse direction" in some cases. The MD direction (conveying direction, longitudinal direction) and the TD direction (transverse direction) are the directions intersecting with each other, and are more specifically the directions perpendicular to each other. In other words, the stretching apparatus 5 shown in FIG. 1 is a stretching apparatus capable of simultaneously stretching the film 8 in two directions intersecting with each other while conveying the film 8, and is referred to as a "simultaneous biaxial stretching apparatus" in general.

### <Stretching Apparatus>

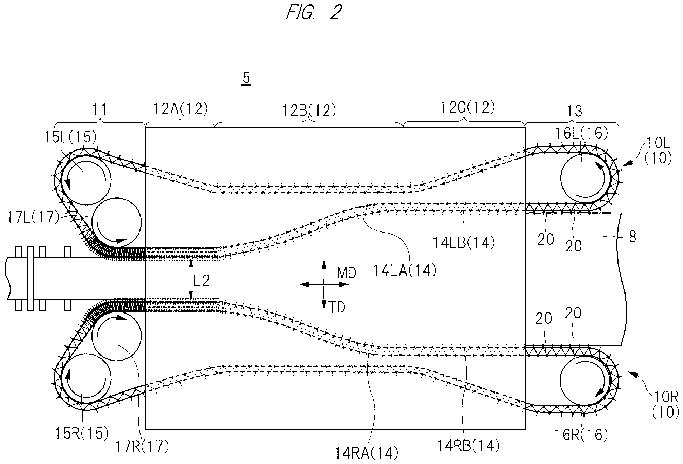

FIG. 2 is a plan view schematically showing an example of a structure of the stretching apparatus shown in FIG. 1. In FIG. 2, each of a plurality of rails 14 and link devices 10 is illustrated such that the part covered with an oven in a heat treatment unit 12 is indicated by dotted lines and the part located outside the heat treatment unit 12 is indicated by solid lines. The stretching apparatus 5 includes a pair of link devices 10, an inlet section 11, the heat treatment unit 12, and an outlet section 13. The stretching apparatus 5 further includes the plurality of rails 14 laid on a support base (bed). Also, the stretching apparatus 5 includes three sprockets 15, 16, and 17 disposed on an inner side of the rail 14.

The pair of link devices 10 are spaced apart from each other in plan view. In the following description, one of the pair of link devices 10 is referred to as a "link device 10R", and the other of the pair of link devices 10 is referred to as a "link device 10L" in some cases.

The link device 10R and the link device 10L are spaced apart from each other in the TD direction and face each other in the TD direction with the film 8 interposed therebetween. The film 8 is conveyed through the space between the link device 10R and the link device 10L in the MD direction. In other words, the space between the link device 10R and the link device 10L facing each other functions as a conveyance path for conveying the film 8.

Each of the inlet section 11 and the outlet section 13 is a part disposed outside the oven as the heat treatment unit 12. In this specification, in the region outside the heat treatment unit 12, the part on the inlet side of the film 8 is referred to as the inlet section 11, and the part on the outlet side of the film 8 is referred to as the outlet section 13.

The heat treatment unit 12 is divided into three regions 12A, 12B, and 12C along the conveying direction (MD direction). The region 12A serves as a preheating region, the region 12B serves as a stretching region, and the region 12C serves as a heat setting region. The regions 12A, 12B, and 12C are arranged in this order in the conveying direction (MD direction).

The heat treatment unit 12 covers central parts of the link devices 10R and 10L, and heats the film 8 conveyed by the link devices 10R and 10L. The heat treatment unit 12 in this embodiment is composed of an oven capable of heating the film 8 to a desired temperature. The film 8 passes through the inside of the oven as the heat treatment unit 12 while being gripped by the link devices 10R and 10L. The oven as the heat treatment unit 12 covers the region 12A, the region 12B, and the region 12C.

The plurality of rails 14 includes a pair of rails 14RA and 14RB supporting one link device 10R of the pair of link devices 10 and a pair of rails 14LA and 14LB supporting the other link device 10L of the pair of link devices 10.

The rail 14LB is disposed on an outer side of the rail 14LA and surrounds the rail 14LA. From another viewpoint, the rail 14LA is disposed on an inner side of the rail 14LB and is surrounded by the rail 14LB. Similarly, the rail 14RB is disposed on an outer side of the rail 14RA and surrounds the rail 14RA. From another viewpoint, the rail 14RA is disposed on an inner side of the rail 14RB and is surrounded by the rail 14RB.

The rails 14LA and 14RA are referred to as "inner rails" and the rails 14LB and 14RB are referred to as "outer rails" in some cases. Also, the rails 14LA and 14RA are referred to as "reference rails" or "SP rails" and the rails 14LB and 14RB are referred to as "MD rails" in some cases.

Each of the plurality of rails 14 is annularly disposed over the regions 12A, 12B, and 12C. More specifically, each of the plurality of rails 14 (in other words, rails 14LA, 14RA, 14LB, and 14RB) is turned back in the inlet section 11 and turned back in the outlet section 13 so as to be annularly disposed over the inlet section 11, the heat treatment unit 12, and the outlet section 13.

Each of the three sprockets 15, 16, and 17 is a gear that drives one of the pair of link devices 10. Each of the three sprockets 15, 16, and 17 is connected to a motor (not shown). Of the three sprockets 15, 16, and 17, the sprocket 15 and the sprocket 17 are disposed in the inlet section 11, and the sprocket 16 is disposed in the outlet section 13.

Each of the three sprockets 15L, 16L, and 17L is disposed on the inner side of the rail 14LA. Each of the three sprockets 15R, 16R, and 17R is disposed on the inner side of the rail 14RA.

The plurality of link mechanisms 20 provided in the link device 10L is disposed on the rails 14LA and 14LB in a state of being movable along the pair of rails 14LA and 14LB. The sprockets 15L, 16L, and 17L of the link device 10L engage with the plurality of link mechanisms 20 of the link device 10L. Therefore, when the sprockets 15L, 16L, and 17L rotate, a driving force acts on the plurality of link mechanisms 20 of the link device 10L, and the plurality of link mechanisms 20 coupled to each other moves (runs) along the extending direction of the rails 14LA and 14LB.

Similarly, the plurality of link mechanisms 20 provided in the link device 10R is disposed on the rails 14RA and 14RB in a state of being movable along the pair of rails 14RA and 14RB. The sprockets 15R, 16R, and 17R of the link device 10R engage with the plurality of link mechanisms 20 of the link device 10R. Therefore, when the sprockets 15R, 16R, and 17R rotate, a driving force acts on the plurality of link mechanisms 20 of the link device 10R, and the plurality of link mechanisms 20 coupled to each other moves (runs) along the extending direction of the rails 14RA and 14RB.

In other words, the plurality of rails 14 is guide members for moving (running) the plurality of link mechanisms 20 in a predetermined direction.

An interval (pitch) between adjacent link mechanisms 20 changes in accordance with an interval (separation distance) between the rails 14LA and 14RA and the rails 14LB and 14RB. In other words, the interval between the adjacent link mechanisms 20 can be adjusted by adjusting the separation distance between the rail 14LA and the rail 14LB or the separation distance between the rail 14RA and the rail 14RB. The interval (pitch) between the adjacent link mechanisms 20 is referred to also as "link pitch" in some cases.

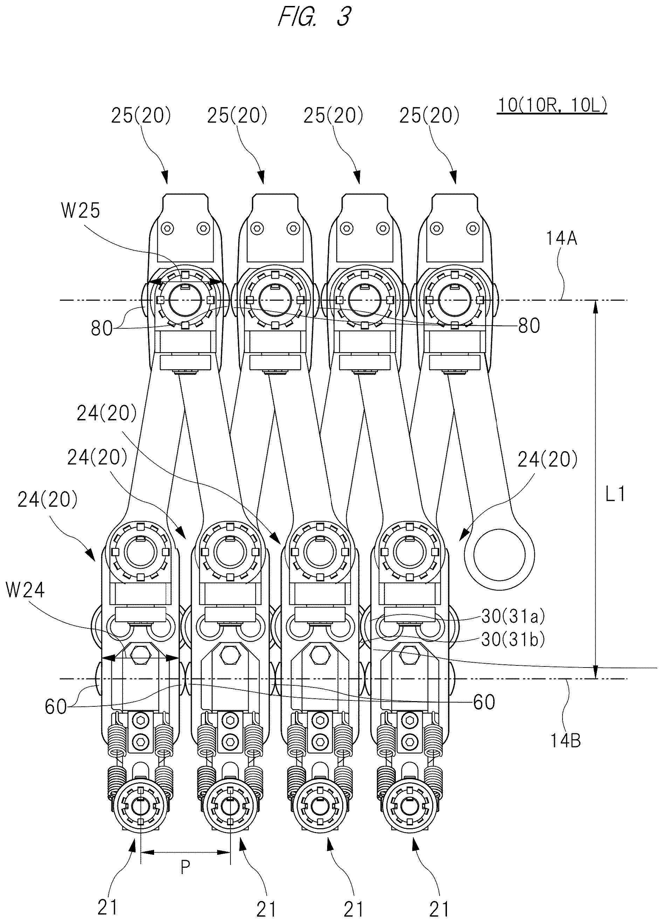

In the following description, for each of the link devices 10R and 10L, the side facing the film 8 is referred to as a "film side", and the side opposite to the film side is referred to as a "return side" in some cases. In other words, the side on which the plurality of link mechanisms 20 moves from the inlet section 11 toward the outlet section 13 while clips 21 (see FIG. 3 described later) are gripping the film 8 is the film side. Also, the side which is located on the opposite side of the film side and on which the plurality of link mechanisms 20 moves from the outlet section 13 toward the inlet section 11 while the clips 21 do not grip the film 8 is the return side.

### <Link Device>

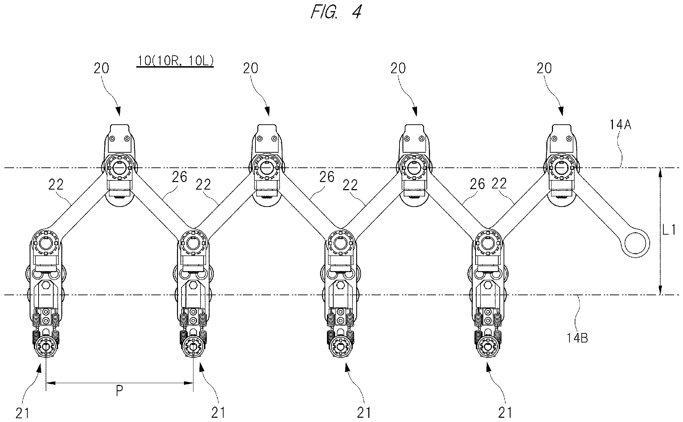

FIG. 3 is a plan view showing a plurality of link mechanisms in a closed state. FIG. 4 is a plan view showing the plurality of link mechanisms in an open state.

The link device 10L and the link device 10R shown in FIG. 2 are structured to be line-symmetrical with respect to the center line of the film 8. Similarly, the pair of rails 14LA and 14LB and the pair of rails 14RA and 14RB are structured to be line-symmetrical with respect to the center line of the film 8. In the following, the link device 10L and the link device 10R will be collectively referred to as the link device 10 instead of the link device 10L or the link device 10R. Similarly, the pair of rails 14LA and 14LB and the pair of rails 14RA and 14RB will be collectively referred to as the pair of rails 14A and 14B instead of the pair of rails 14LA and 14LB or the pair of rails 14RA and 14RB.

As shown in FIG. 3 and FIG. 4, the link device 10 is made up of the plurality of link mechanisms 20 coupled to each other. Each of the plurality of link mechanisms 20 is supported by the rail 14A and the rail 14B.

As shown in FIG. 3 and FIG. 4, the angle formed by the adjacent link mechanisms 20 becomes larger and the pitch P between the adjacent link mechanisms 20 becomes larger as the separation distance L1 between the rails 14A and 14B becomes smaller. On the other hand, the angle formed by the adjacent link mechanisms 20 becomes smaller and the pitch P between the adjacent link mechanisms 20 becomes smaller as the separation distance L1 between the rails 14A and 14B becomes larger. Note that the pitch P can be interpreted as the center-to-center distance between the adjacent link mechanisms 20.

Note that the pitch P shown in FIG. 3 is 40 mm and the pitch P shown in FIG. 4 is 120 mm. Thus, FIG. 4 shows the state where the link mechanisms 20 shown in FIG. 3 are opened until the magnification in the longitudinal direction becomes five times. Also, the plurality of link mechanisms 20 shown in FIG. 3 is closed until the adjacent link mechanisms 20 come closest to each other. In other words, the minimum pitch between the adjacent link mechanisms 20 is 40 mm.

In the following description, when the phrase "in the state where the link mechanisms 20 are closed" is used, it means the state where the pitch P between the adjacent link mechanisms 20 is the minimum value as shown in FIG. 3. On the other hand, when the phrase "in the state where the link mechanisms 20 are open" is used, it means the state where the pitch P between the adjacent link mechanisms 20 becomes a value larger than the minimum value as shown in the example in FIG. 4.

Each of the plurality of link mechanisms 20 has the clip 21 configured to grip the film 8. The pitch between the adjacent clips 21 also increases and decreases in accordance with the increase and decrease of the pitch P between the adjacent link mechanisms 20. For example, when the separation distance L1 between the rails 14A and 14B decreases, the pitch P between the link mechanisms 20 increases. When the pitch P between the link mechanisms 20 increases, the pitch between the clips 21 also increases (FIG. 3 → FIG. 4). On the other hand, when the separation distance L1 between the rails 14A and 14B increases, the pitch P between the link mechanisms 20 decreases. When the pitch P between the link mechanisms 20 decreases, the pitch between the clips 21 also decreases (FIG. 4 → FIG. 3).

Since each of the plurality of link mechanisms 20 is provided with the clip 21, the pitch between the two adjacent link mechanisms 20 and the pitch between the two clips 21 provided in these link mechanisms 20 are the same. In other words, the pitch P shown in FIG. 3 and FIG. 4 is not only the pitch between the adjacent link mechanisms 20 but also the pitch (center-to-center distance) between the adjacent clips 21.

### <Operation of Stretching Apparatus>

The film 8 supplied from the raw sheet cooling apparatus 4 to the stretching apparatus 5 shown in FIG. 1 is gripped by the link devices 10R and 10L at the inlet of the stretching apparatus 5. Specifically, the film 8 is gripped by the clips 21 in the plurality of link mechanisms 20 of the link devices 10 shown in FIG. 2 and FIG. 3. More specifically, an end portion of the film 8 on one side in the width direction is gripped by the clips 21 in the link mechanisms 20 of the link device 10R, and an end portion of the film 8 on the other side in the width direction is gripped by the clips 21 in the link mechanisms 20 of the link device 10L.

The film 8 whose both sides in the width direction are gripped by the clips 21 is conveyed from the inlet to the outlet of the stretching apparatus 5 along with the movement of the link mechanisms 20 including the clips 21, and passes through the region 12A (preheating region), the region 12B (stretching region), and the region 12C (heat setting region) in this order. The film 8 is stretched in the MD direction and the TD direction while passing through the region 12B (stretching region). Thereafter, the film 8 reaches the outlet through the region 12C (heat setting region) and is released from the clips 21. The film 8 released from the clips 21 is conveyed to the take-off apparatus 6 and is further conveyed from the take-off apparatus 6 to the winder apparatus 7.

As shown in FIG. 2, in the region 12A (preheating region), the interval (separation distance) L2 between the rail 14RB on which the link mechanisms 20 of the link device 10R run and the rail 14LB on which the link mechanisms 20 of the link device 10L run is almost constant. Therefore, the stretching process of the film 8 in the TD direction is not performed in the region 12A. Accordingly, the width (dimension in the TD direction) of the conveyed film 8 does not change and remains constant in the region 12A.

The stretching process in the TD direction shown in FIG. 2 is performed by gradually increasing the interval L2 shown in FIG. 2. Therefore, the stretching process of the film 8 in the TD direction is not performed in the region 12A. Accordingly, the width (dimension in the TD direction) of the conveyed film 8 does not change and remains constant in the region 12A.

Also, on the film side in the region 12A (preheating region), each of the interval (separation distance) between the rail 14RA and the rail 14RB on which the link mechanisms 20 of the link device 10R run and the interval (separation distance) between the rail 14LA and the rail 14LB on which the link mechanisms 20 of the link device 10L run is almost constant. For example, on the film side in the region 12A, each of the interval between the rail 14RA and the rail 14RB on which the link mechanisms 20 of the link device 10R run and the interval between the rail 14LA and the rail 14LB on which the link mechanisms 20 of the link device 10L run is almost the same as the separation distance L1 shown in FIG. 3.

Further, the pitch P shown in FIG. 3 and FIG. 4 changes in accordance with the separation distance L1 between the rail 14A and the rail 14B. Therefore, on the film side in the region 12A (preheating region) shown in FIG. 2, the pitch P (see FIG. 3) in the link device 10R and the link device 10L is almost constant. Therefore, the pitch P of the clips 21 in the plurality of link mechanisms 20 is also almost constant. For example, the pitch P of the clips 21 is almost the same as the pitch P shown in FIG. 3.

The stretching process in the MD direction shown in FIG. 2 is performed by gradually increasing the pitch P between the clips 21 shown in FIG. 3. Therefore, the stretching process of the film 8 in the MD direction is not performed in the region 12A. Accordingly, the length (dimension in the MD direction) of the conveyed film 8 does not change and remains constant in the region 12A. In other words, the stretching process of the film 8 is not performed in either the TD direction or the MD direction in the region 12A.

In addition, from the viewpoint of increasing the variation range of the pitch P, it is preferable that the pitch P is small in the region 12A (see FIG. 2) prior to the start of the stretching process in the MD direction. For example, in the example shown in FIG. 3, parts of the adjacent link mechanisms 20 are in contact with each other. More specifically, parts of roller holders 60 provided in the link mechanisms 20 are in contact with each other. The detailed structure of the roller holder 60 will be described later.

Next, the operation of the stretching apparatus 5 in the region 12B will be described. As shown in FIG. 2, in the region 12B, as the link mechanism 20 advances in the conveying direction (MD direction), the interval (separation distance) L2 between the rail 14RB on which the link mechanisms 20 of the link device 10R run and the rail 14LB on which the link mechanisms 20 of the link device 10L run gradually increases. For this reason, on the film side in the region 12B, the film 8 is pulled and stretched in the TD direction as it advances in the conveying direction (MD direction). In other words, in the region 12B, the width (dimension in the TD direction) of the film 8 gradually increases as it advances in the conveying direction (MD direction).

Also, on the film side in the region 12B, as advancing in the conveying direction (MD direction), the separation distance (interval) (see FIG. 3 and FIG. 4) between the rail 14RA and the rail 14RB on which the link mechanisms 20 of the link device 10R run gradually decreases. Also, on the film side in the region 12B, the separation distance (interval) between the rail 14LA and the rail 14LB on which the link mechanisms 20 of the link device 10L run also gradually decreases.

As a result, on the film side in the region 12B, as advancing in the conveying direction (MD direction), the pitch P (see FIG. 3 and FIG. 4) of the link mechanisms 20 of the link device 10R gradually increases, and thus the pitch of the clips 21 of the link device 10R also gradually increases. Further, on the film side in the region 12B, as advancing in the conveying direction (MD direction), the pitch P of the link mechanisms 20 of the link device 10L gradually increases, and thus the pitch of the clips 21 of the link device 10L also gradually increases.

As a result, in the region 12B, the film 8 is pulled and stretched in the MD direction as it advances in the conveying direction (MD direction). Therefore, in the region 12B, the film 8 is stretched (extended) in the TD direction and the MD direction as it advances in the conveying direction (MD direction). That is, the stretching process in the TD direction and the MD direction is performed on the film 8 in the region 12B.

Next, the operation of the stretching apparatus 5 in the region 12C will be described. In the region 12C, the interval (separation distance) L2 between the rail 14RB on which the link mechanisms 20 of the link device 10R run and the rail 14LB on which the link mechanisms 20 of the link device 10L run is almost constant. For this reason, in the region 12C, the stretching process in the TD direction is not performed on the film 8. Therefore, in the region 12C, the width (dimension in the TD direction) of the conveyed film 8 does not change and remains constant.

In addition, on the film side in the region 12C, the separation distance (interval) (see FIG. 4) between the rail 14A and the rail 14B on which the link mechanisms 20 of the link device 10R run is almost constant. Therefore, on the film side in the region 12C, the pitch P of the link mechanisms 20 of the link device 10R is almost constant, and thus the pitch of the clips 21 of the link device 10R is also almost constant.

Similarly, on the film side in the region 12C, the separation distance (interval) between the rail 14A and the rail 14B on which the link mechanisms 20 of the link device 10L run is almost constant. Therefore, on the film side in the region 12C, the pitch P of the link mechanisms 20 of the link device 10L is almost constant, and thus the pitch of the clips 21 of the link device 10L is also almost constant.

As a result, in the region 12C, the stretching process in the MD direction is not performed on the film 8. In other words, the stretching process of the film 8 is not performed in either the TD direction or the MD direction in the region 12C.

Next, the operation of the stretching apparatus 5 on the return side will be described. On the return side of each of the link device 10R and the link device 10L, the clips 21 (see FIG. 3) do not hold the film 8. Therefore, the separation distance L1 between the rail 14A and the rail 14B of the link device 10 shown in FIG. 3 and FIG. 4 does not directly affect the quality of the film 8. Therefore, the separation distance L1 can be arbitrarily set.

However, from the viewpoint of reducing the number of link mechanisms 20 provided in the link device 10, the following mode is preferred. That is, it is preferable that the separation distance L1 on the return side (see FIG. 4) is smaller than the separation distance L1 on the film side in the region 12A (see FIG. 3). For example, as shown in FIG. 4, when the separation distance L1 is small, the pitch P of the adjacent link mechanisms 20 becomes large. In this case, it is possible to reduce the number of link mechanisms 20 disposed on the path on the return side leading from the outlet section 13 toward the inlet section 11 shown in FIG. 2.

The reduction in the number of link mechanisms 20 contributes to the reduction in the number of parts of the link device 10, thereby reducing the risk of failures. Reducing the failure occurrence frequency in the link device 10 is preferable from the viewpoint of improving the performance of the stretching apparatus 5 because it improves the efficiency of the stretching process.

From the above viewpoints, in this embodiment, the separation distance L1 on the return side (see FIG. 4) is smaller than the separation distance L1 on the film side in the region 12A (see FIG. 3). Furthermore, the separation distance L1 on the return side may be smaller than the separation distance L1 on the film side in the region 12C. It is particularly preferable that the separation distance L1 on the return side is equal to or smaller than the separation distance L1 on the film side in the region 12C.

In other words, in this embodiment, the pitch P of the link mechanisms 20 on the return side (see FIG. 4) is smaller than the pitch P on the film side in the region 12A (see FIG. 3). Also, the pitch P on the return side may be smaller than the pitch P on the film side in the region 12C. It is particularly preferable that the pitch P on the return side is equal to or smaller than the pitch P on the film side in the region 12C.

### <Link Mechanism>

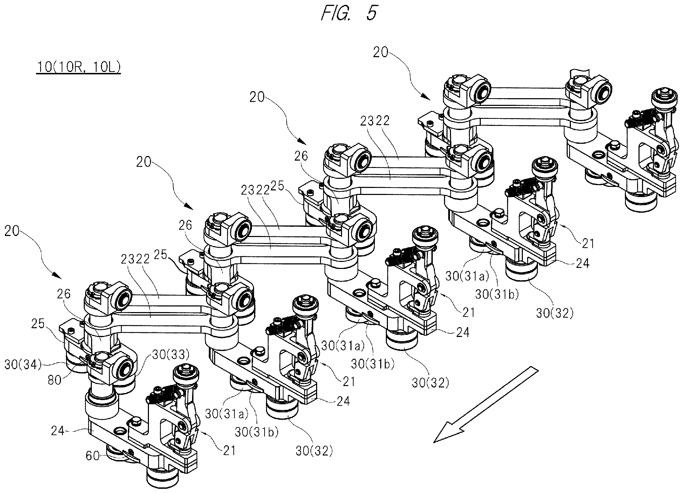

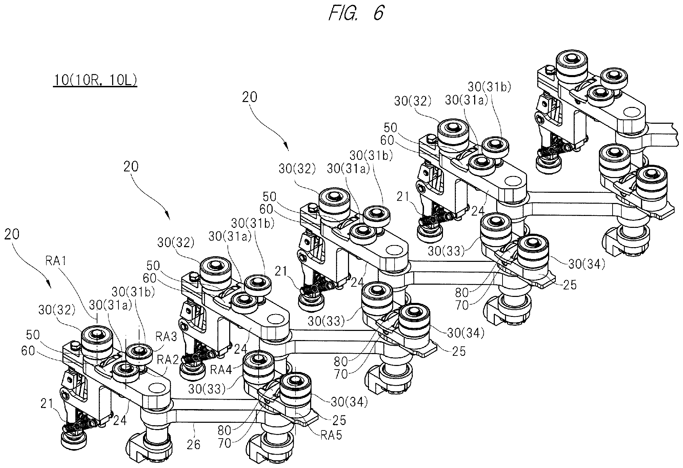

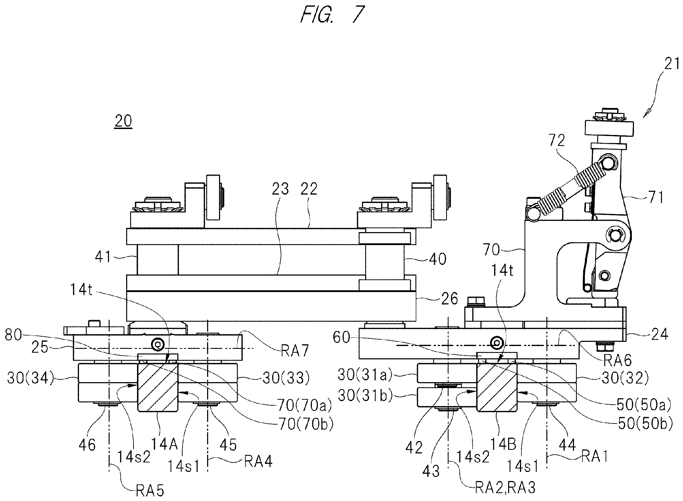

FIG. 5 is a top perspective view showing a part of the plurality of link mechanisms. FIG. 6 is a bottom perspective view showing a part of the plurality of link mechanisms. FIG. 7 is a side view of the link mechanism. In FIG. 7, the rail 14A and the rail 14B are shown in cross-section. Each of the plurality of link mechanisms 20 provided in the link devices 10R and 10L has, in addition to the clip 21, an upper link plate 22, a lower link plate 23, a pair of rail holders 24 and 25, and a base member 26 extending across the pair of rail holders 24 and 25. One rail holder 24 is disposed on the rail 14B (see FIG. 7), and the other rail holder 25 is disposed on the rail 14A (see FIG. 7).

The upper link plate 22 and the lower link plate 23 are plate-like members that extend linearly in plan view. The base member 26 is common with the upper link plate 22 and the lower link plate 23 in that the base member 26 extends linearly in plan view. The base member 26 is thicker than the upper link plate 22 and the lower link plate 23.

One ends of the upper link plate 22 and the lower link plate 23 of the link mechanism 20 are rotatably connected to the rail holder 25 of the link mechanism 20. Meanwhile, the other ends of the upper link plate 22 and the lower link plate 23 of each link mechanism 20 are rotatably connected to the rail holder 24 of the adjacent link mechanism 20.

One end of the base member 26 of the link mechanism 20 is rotatably connected to the rail holder 24 of the link mechanism 20, and the other end of the base member 26 of each link mechanism 20 is rotatably connected to the rail holder 25 of that link mechanism 20.

The rail holders 24 and 25 of the link mechanism 20 are provided with a plurality of side rollers 30 that move along the rails 14A and 14B while rotating.

In the example shown in FIG. 5 to FIG. 7, the rail holder 24 is provided with three side rollers 30. On the other hand, the rail holder 25 is provided with two side rollers 30. In other words, a total of five side rollers 30 are provided in the link mechanism 20 of the link devices 10R and 10L.

### <Rail Holder>

As shown in FIG. 7, each of the rail 14A and the rail 14B has a side surface 14s1, a side surface 14s2 on the opposite side of the side surface 14s1, and an upper surface 14t continuous with each of the side surface 14s1 and the side surface 14s2. The pair of rails 14 include the rail 14A that supports one of the pair of rail holders 24 and 25 and the rail 14B that supports the other of the pair of rail holders 24 and 25.

The rail holder 24 is disposed on the upper surface 14t of the rail 14B so as to straddle the rail 14B. At this time, the central portion of the rail holder 24 in the longitudinal direction is located directly or approximately directly above the upper surface 14t of the rail 14B. One end side of the rail holder 24 in the longitudinal direction protrudes toward the inner side of the rail 14B (the side facing the rail 14A), and the other end side of the rail holder 24 in the longitudinal direction protrudes toward the outer side of the rail 14B (the side opposite to the side facing the rail 14A).

The rail holder 25 is disposed on the upper surface 14t of the rail 14A so as to straddle the rail 14A. At this time, the central portion of the rail holder 25 in the longitudinal direction is located directly or approximately directly above the upper surface 14t of the rail 14A. One end side of the rail holder 25 in the longitudinal direction protrudes toward the inner side of the rail 14A (the side facing the rail 14B), and the other end side of the rail holder 25 in the longitudinal direction protrudes toward the outer side of the rail 14A (the side opposite to the side facing the rail 14B).

The rail holder 24 is provided with a link shaft 40 to which one end of the base member 26 is rotatably connected. The rail holder 25 is provided with a link shaft 41 to which the other end of the base member 26 is rotatably connected. The link shaft 40 is provided on one end side of the rail holder 24 that protrudes toward the inner side of the rail 14B. Meanwhile, the link shaft 41 is provided at the center of the rail holder 25 in the longitudinal direction, which is located directly or approximately directly above the rail 14A.

In addition to one end of the base member 26, one ends of the upper link plate 22 and the lower link plate 23 are also rotatably connected to the link shaft 41 provided on the rail holder 25. Note that the other ends of the upper link plate 22 and the lower link plate 23 are rotatably connected to the link shaft 40 provided on the rail holder 24 of another adjacent link mechanism 20.

The link shaft 40 is a link shaft on the side of the rail 14B. Also, the link shaft 41 is a link shaft on the side of the rail 14A. The link shaft 40 is provided on one end side of the rail holder 24, which protrudes toward the inner side of the rail 14B. Meanwhile, the link shaft 41 is provided at the center of the rail holder 25 in the longitudinal direction, which is located directly or approximately directly above the rail 14A. Note that the clip 21 is provided at the end of the rail holder 24, which protrudes toward the outer side of the rail 14B.

### <Side Roller>

As shown in FIG. 7, three roller shafts 42, 43, and 44 parallel to each other are provided on the rail holder 24. When the rail holder 24 is disposed on the rail 14B, the roller shafts 42 and 43 are disposed on one side (inner side) of the rail 14B, and the roller shaft 44 is disposed on the other side (outer side) of the rail 14B.

Parts of the roller shafts 42, 43, and 44 are press-fitted into the rail holder 24, and the other parts of the roller shafts 42, 43, and 44 protrude toward the lower side of the rail holder 24. The side rollers 30 are rotatably attached to the protruding portions of the roller shafts 42, 43, and 44, which protrude toward the lower side of the rail holder 24.

The outer diameters of the plurality of side rollers 30 are the same in plan view. However, as a modification, side rollers having different outer diameters may be applied. For example, a side roller 32 having an outer diameter larger than those of side rollers 31a and 31b attached to the roller shafts 42 and 43 may be rotatably attached to the roller shaft 44.

When the rail holder 24 moves on the rail 14B, the side rollers 31a and 31b move along the inner side surface of the rail 14B while rotating. When the rail holder 24 moves on the rail 14B, the side roller 32 moves along the outer side surface of the rail 14B while rotating.

Each of the plurality of side rollers 30 supported by the rail holder 24 can be expressed as follows. That is, the side roller 32 is a side roller that is supported by the rail holder 24 and can rotate around an axis RA1 as a rotation axis while being in contact with the side surface 14s1 of the rail 14B. In the example shown in FIG. 7, the axis RA1 is parallel to the normal direction of the upper surface 14t.

The side roller 31a is a side roller that is supported by the rail holder 24 and can rotate around an axis RA2 as a rotation axis located on an opposite side of the axis RA1 across the rail 14B while being in contact with the side surface 14s2 of the rail 14B. In the example shown in FIG. 7, the axis RA2 is parallel to the normal direction of the upper surface 14t.

The side roller 31b is a side roller that is supported by the rail holder 24 and can rotate around an axis RA3 as a rotation axis located on an opposite side of the axis RA1 across the rail 14B while being in contact with the side surface 14s2 of the rail 14B. In the example shown in FIG. 7, the axis RA3 is parallel to the normal direction of the upper surface 14t.

However, in order to achieve smoother movement of the rail holder 24, a small gap (clearance) is provided between the side rollers 31a and 31b and the inner side surface of the rail 14B. For the same reason, a small gap (clearance) is also provided between the side roller 32 and the outer side surface of the rail 14B. Therefore, the above-mentioned "can rotate while being in contact" includes not only a mode in which the roller can rotate while being in continuous contact, but also a mode in which the roller can rotate while being in intermittent contact.

Note that, in the side view shown in FIG. 7, the axis RA2 and the axis RA3 overlap each other. However, as shown in FIG. 6, the axis RA2 and the axis RA3 are spaced apart from each other.

Understandably, what the three side rollers 30 provided on the rail holder 24 have in common is that they are the outer rings of rolling bearings attached to the shafts. Therefore, the side roller 31a rotates around the roller shaft 42 as a rotation axis, and the side roller 31b rotates around the roller shaft 43 as a rotation axis. Furthermore, the side roller 32 rotates around the roller shaft 44 as a rotation axis.

As shown in FIG. 6, the side roller 31a and the side roller 31b are disposed at different heights in the direction of the rotation axis. Furthermore, the side roller 31a and the side roller 31b overlap each other partially in the radial direction.

As shown in FIG. 7, the side roller 31a is disposed at a position higher than that of the side roller 31b in the direction of the rotation axis. In other words, the side roller 31b is disposed at a position lower than that of the side roller 31a in the direction of the rotation axis. From another viewpoint, the side roller 31a and the side roller 31b are disposed at different levels.

In the link mechanism 20 in which the side roller 31a is disposed at a higher position and the side roller 31b is disposed at a lower position, a gap larger than the thickness of the side roller 31a is present between the rail holder 24 and the side roller 31b. On the other hand, in the link mechanism 20 in which the side roller 31a is disposed at a lower position and the side roller 31b is disposed at a higher position, a gap larger than the thickness of the side roller 31b is present between the rail holder 24 and the side roller 31a.

In addition, as shown in FIG. 3, in the state where the link mechanisms 20 are closed, the side roller 31a and the side roller 31b have the following positional relationship. That is, in plan view, the side roller 31a of a certain link mechanism 20 overlaps the side roller 31b of another link mechanism 20 adjacent thereto.

In this embodiment, the link mechanisms 20 are configured such that the side roller 31a and the side roller 31b can be disposed to overlap each other in the state where the link mechanisms 20 are closed. This makes it possible to avoid contact between the side roller 31a and the side roller 31b and to reduce the pitch P shown in FIG. 3.

Referring to FIG. 7 again, two roller shafts 45 and 46 parallel to each other are provided on the rail holder 25. When the rail holder 25 is disposed on the rail 14A, the roller shaft 45 is disposed on one side (inner side) of the rail 14A, and the roller shaft 46 is disposed on the other side (outer side) of the rail 14A.

Parts of the roller shafts 45 and 46 are press-fitted into the rail holder 25, and the other parts of the roller shafts 45 and 46 protrude toward the lower side of the rail holder 25. The side rollers 30 are rotatably attached to the protruding portions of the roller shafts 45 and 46, which protrude toward the lower side of the rail holder 25.

The side rollers 30 having the same outer diameter as that of the side roller 32 are rotatably attached to the roller shafts 45 and 46, respectively. Each of the side rollers 33 and 34 can be expressed as follows. That is, the side roller 33 is a side roller that is supported by the rail holder 25 and can rotate around an axis RA4 as a rotation axis while being in contact with the side surface 14s1 of the rail 14A. In the example shown in FIG. 7, the axis RA4 is parallel to the normal direction of the upper surface 14t.

When the rail holder 25 moves on the rail 14A, the side roller 33 moves along the inner side surface of the rail 14A while rotating. When the rail holder 25 moves on the rail 14A, the side roller 34 moves along the outer side surface of the rail 14A while rotating.

As shown in FIG. 7, the side roller 33 is a side roller that is supported by the rail holder 25 and can rotate around the axis RA4 as a rotation axis, which is parallel to the normal direction of the upper surface 14t of the rail 14A, while being in contact with the side surface 14s1 of the rail 14A.

The side roller 34 is a side roller that is supported by the rail holder 25 and can rotate around an axis RA5 as a rotation axis located on an opposite side of the axis RA4 across the rail 14A while being in contact with the side surface 14s2 of the rail 14A. In the example shown in FIG. 7, the axis RA5 is parallel to the normal direction of the upper surface 14t of the rail 14A.

However, in order to achieve smoother movement of the rail holder 25, a small gap (clearance) is provided between the side roller 33 and the inner side surface of the rail 14A. For the same reason, a small gap (clearance) is also provided between the side roller 34 and the outer side surface of the rail 14A. Therefore, the above-mentioned "can rotate while being in contact" includes not only a mode in which the roller can rotate while being in continuous contact, but also a mode in which the roller can rotate while being in intermittent contact.

The side roller 34 is a side roller that is supported by the rail holder 25 and can rotate around the axis RA5 as a rotation axis, which is parallel to the normal direction of the upper surface 14t, while being in contact with the side surface 14s2 of the rail 14A.

Understandably, what the two side rollers 30 provided on the rail holder 25 have in common is that they are the outer rings of rolling bearings attached to the shafts. Therefore, the side roller 33 rotates around the roller shaft 45 as a rotation axis. Also, the side roller 34 rotates around the roller shaft 46 as a rotation axis.

### <Upper Roller and Roller Holder>

As shown in FIG. 6, each of the plurality of link mechanisms 20 includes an upper roller 50, a roller holder 60, an upper roller 70, and a roller holder 80.

As shown in FIG. 7, the upper roller 50 is rotatably provided on the rail holder 24. The upper roller 50 is supported by the roller holder 60 fixed to the rail holder 24. The upper roller 50 is disposed between the side rollers 31a and 31b and the side roller 32 in the longitudinal direction of the rail holder 24. As will be described in detail later, the rotation axis of the upper roller 50 is perpendicular to the rotation axes (axes RA1, RA2, and RA3) of the side rollers 31a and 31b and the side roller 32. When the rail holder 24 moves on the rail 14B, the upper roller 50 moves on the upper surface of the rail 14B while rotating. The upper roller 50 is always in contact with the upper surface 14t of the rail 14B and supports the rail holder 24. In other words, the upper roller 50 is a support roller that supports the rail holder 24.

The upper roller 70 is rotatably provided on the rail holder 25. The upper roller 70 is supported by the roller holder 80 fixed to the rail holder 25. The upper roller 70 is disposed between the side roller 33 and the side roller 34 in the longitudinal direction of the rail holder 25. As will be described in detail later, the rotation axis of the upper roller 70 is perpendicular to the rotation axes (axes RA4 and RA5) of the side rollers 33 and 34. When the rail holder 25 moves on the rail 14A, the upper roller 70 moves on the upper surface 14t of the rail 14A while rotating. The upper roller 70 is always in contact with the upper surface 14t of the rail 14A and supports the rail holder 25. In other words, the upper roller 70 is a support roller that supports the rail holder 25.

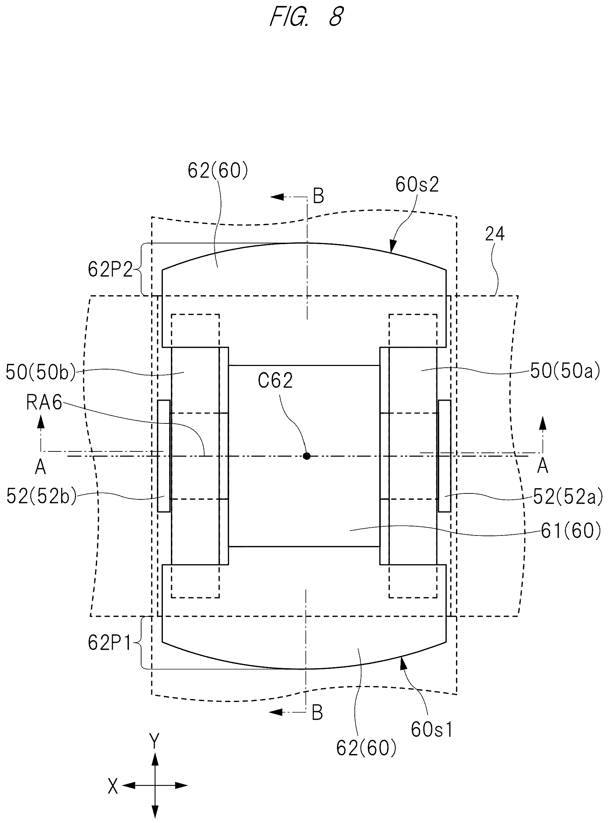

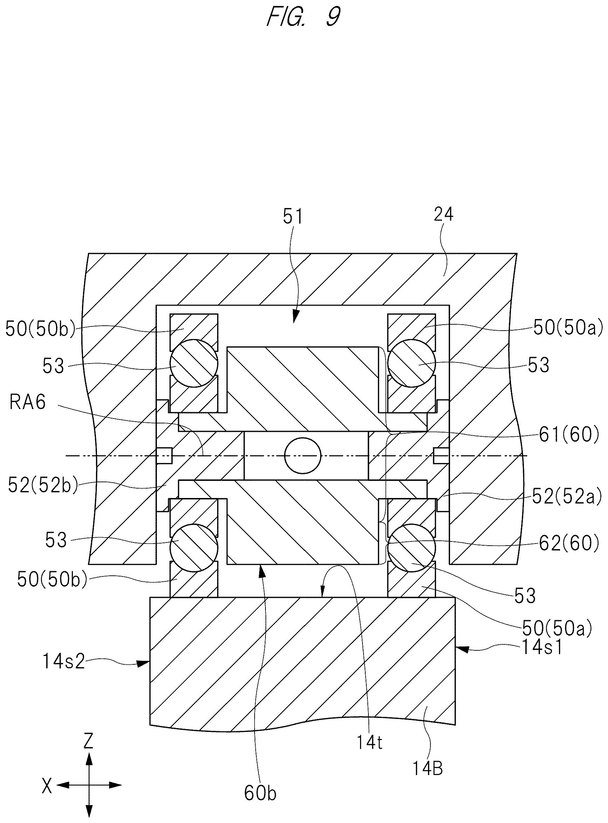

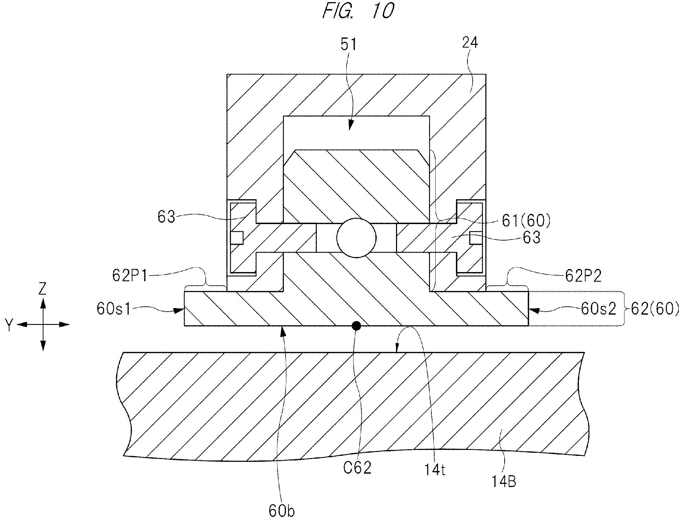

Hereinafter, the upper roller 50 and the roller holder 60 shown in FIG. 6 will be described in detail. FIG. 8 is a transparent plan view of one of the two roller holders shown in FIG. 7 and the upper roller held by the roller holder. FIG. 9 is a cross-sectional view taken along the line A-A in FIG. 8. FIG. 10 is a cross-sectional view taken along the line B-B in FIG. 8. The roller holder 60 shown in FIG. 8 to FIG. 10 is fixed to the rail holder 24 shown in FIG. 7. FIG. 10 is a transparent plan view of the other of the two roller holders shown in FIG. 7 and the upper roller held by the roller holder.

In FIG. 8, the X direction and the Y direction are shown. The X direction and the Y direction intersect with each other. In the example described below, the X direction is perpendicular to the Y direction. In the following, the plane including the X direction and the Y direction will be described as the X-Y plane. In the following description, unless otherwise specified, "in plan view" means a case of viewing a plane parallel to the X-Y plane. In addition, as shown in FIG. 9 and FIG. 10, the normal direction to the X-Y plane will be described as the "Z direction" or the thickness direction. The X direction, the Y direction, and the Z direction are directions that intersect with one another, and more specifically are directions that are perpendicular to one another.

As shown in FIG. 9 and FIG. 10, the rail holder 24 has a roller housing portion 51, which is an opening for housing the upper roller 50. The roller housing portion 51 is an opening formed in a part of the lower surface of the rail holder 24.

The upper roller 50 is disposed in the roller housing portion 51. Also, the upper roller 50 is held by the roller holder 60 in a state where it can rotate around an axis RA6 as a rotation axis while being in contact with the upper surface 14t of the rail 14B. The axis RA6 intersects with each of the axis RA1 and the axis RA2 shown in FIG. 7. In the example shown in FIG. 9, the axis RA6 is perpendicular to each of the axis RA1 and the axis RA2 shown in FIG. 7. Further, in the example shown in FIG. 9, the axis RA6 is parallel to the upper surface 14t of the rail 14B.

In the example shown in FIG. 9, the upper roller 50 is an annular member that is in contact with the upper surface 14t of the rail 14B. A plurality of ball bearings 53 is disposed between a shaft member 52 disposed along the axis RA6 and the upper roller 50. In this embodiment, the upper roller 50 is configured to rotate smoothly by the rotation of the plurality of ball bearings 53.

The roller holder 60 is fixed to the roller housing portion 51 of the rail holder 24. In the example shown in FIG. 8 and FIG. 9, the roller holder 60 is fixed to the roller housing portion 51 via the shaft member 52 (and a bolt 63 shown in FIG. 10 described later). Further, the roller holder 60 holds the upper roller 50 in a rotatable state.

The roller holder 60 has a through hole that extends in the X direction parallel to the axis RA6. In the example shown in FIG. 9, a part 61 has a cylindrical portion that protrudes from the side surface of the part 61 along the through hole. A part of the shaft member 52 is inserted into the cylindrical portion of the part 61.

In the example shown in FIG. 8, the upper roller 50 includes an upper roller 50a disposed on one side of the part 61 of the roller holder 60 and an upper roller 50b disposed on the other side of the part 61. In plan view, each of the upper rollers 50a and 50b is disposed between a side surface 60s1 and a side surface 60s2 of a part 62. In other words, in plan view, the upper rollers 50 are disposed on both sides of the part 61, and are disposed between the side surface 60s1 and the side surface 60s2.

Although not shown, only one upper roller 50 may be provided as a modification. However, considering stability on the rail 14B, it is preferable that the plurality of upper rollers 50 is arranged along the X direction and each of the plurality of upper rollers 50 is in constant contact with the rail 14B as shown in FIG. 8 and FIG. 9.

As shown in FIG. 8 to FIG. 10, the roller holder 60 has the part 61 that is housed in the roller housing portion 51 (see FIG. 9 and FIG. 10). Also, the roller holder 60 has the part 62 that has a lower surface 60b (see FIG. 9 and FIG. 10) exposed to the outside of the roller housing portion 51 and is disposed so as to face the upper surface 14t of the rail 14B (see FIG. 9 and FIG. 10).

The part 62 has the lower surface 60b (see FIG. 9 and FIG. 10) that can be positioned so as to face the upper surface 14t (see FIG. 9 and FIG. 10) of the rail 14B, the side surface 60s1 (see FIG. 8 and FIG. 10) that is continuous with the lower surface 60b, and the side surface 60s2 (see FIG. 8 and FIG. 10) that is continuous with the lower surface 60b and is located on the opposite side of the side surface 60s1.

As shown in FIG. 10, the lower surface 60b faces the upper surface 14t of the rail 14B, but is not in contact with it. In other words, there is a gap between the lower surface 60b and the upper surface 14t of the rail 14B.

As shown in FIG. 3, in the state where the link mechanisms 20 are closed, in other words, in the state where the pitch P shown in FIG. 3 is at its minimum, parts of the adjacent link mechanisms 20 may come into contact with one another.

Here, when any parts of the link mechanisms 20 come into contact, the contact portions may be damaged depending on the moving speed of the link mechanisms 20 when the contact occurs. In particular, in a location where the pitch between the adjacent link mechanisms 20 is abruptly reduced, such as the inlet section 11 shown in FIG. 2, the components constituting the link mechanisms 20 may be damaged or deteriorated due to collisions between the adjacent link mechanisms 20.

In this embodiment, therefore, the link mechanism 20 is designed such that specific portions thereof come into contact, and the portions designed to collide are made harder, thereby improving durability against the external force due to collisions.

That is, as shown in FIG. 8, in plan view, of the part 62 of the roller holder 60, each of a protruding portion 62P1 having the side surface 60s1 and a protruding portion 62P2 having the side surface 60s2 protrudes to the outside of the rail holder 24. Each of the side surface 60s1 and the side surface 60s2 is harder than the part 61 of the roller holder 60.

As shown in FIG. 8, the roller holder 60 has the protruding portion 62P1 and the protruding portion 62P2, so the roller holders 60 of the adjacent link mechanisms 20 come into contact when the pitch P of the link mechanisms 20 is minimized as shown in FIG. 3. In this case, since the rail holders 24 do not come into contact, deformation of the rail holders 24 due to collisions can be prevented.

Furthermore, it is the side surface 60s1 and the side surface 60s2 of the roller holder 60 shown in FIG. 8 that come into contact with the adjacent roller holders 60. Therefore, it is not necessary to harden the entire roller holder 60, and it is sufficient that at least the side surface 60s1 and the side surface 60s2 are hardened.

If the entire roller holder 60 is made of a hard metal, the workability decreases, so that the manufacturing efficiency of the roller holder 60 decreases.

On the other hand, in this embodiment, it is sufficient that each of the side surface 60s1 and the side surface 60s2 is harder than the part 61 of the roller holder 60, and there is no need to form the entire roller holder 60 from a hard metal.

As a method for selectively hardening each of the side surface 60s1 and the side surface 60s2 as in this embodiment, a heat treatment method referred to as high-frequency induction hardening can be used. The high-frequency induction hardening is a heat treatment method that selectively heats specific portions of a metal part, rather than the entire part, in order to improve the durability of those portions.

When performing the high-frequency induction hardening, a high-frequency induction current is passed through a coil disposed near the specific portion to be heated (side surface 60s1 and side surface 60s2 in this embodiment). An induced current is generated in the specific portion due to the influence of the magnetic force generated by the coil. Since the current density of this induced current is higher as it is closer to the surface of the specific portion, it is possible to selectively heat the area near the surface of the member to be heated. Then, by rapidly cooling the heated area, the surface can be selectively hardened. In addition, in order to improve toughness, tempering may be performed at a low temperature of about 150 to 200 degrees after cooling.

Although not limited to the high-frequency induction hardening shown as an example, by carrying out a heat treatment that selectively heats only specific portions as described above, it is possible to obtain the roller holder 60 in which each of the side surface 60s1 and the side surface 60s2 is harder than the part 61 of roller holder 60, as in this embodiment.

In addition, from the viewpoint of improving the durability of the roller holder 60, it is sufficient that at least the side surface 60s1 and the side surface 60s2 are hardened, but this does not exclude the areas around the side surface 60s1 and the side surface 60s2 from being hardened. For example, even when the protruding portions 62P1 and 62P2 shown in FIG. 8 or the entire surface of the part 62 are harder than the part 61, the durability of the roller holder 60 can be improved.

However, the larger the area to be hardened, the longer the time required for the heat treatment. Therefore, from the viewpoint of improving the efficiency of the heat treatment process, it is preferable that the area to be subjected to the heat treatment is small. For example, it is preferable that the hardness of each of the side surface 60s1 and the side surface 60s2 is greater than the hardness of an intermediate location of the lower surface 60b (see FIG. 10) between the side surface 60s1 and the side surface 60s2 (in other words, a location where the shortest distance from the side surface 60s1 and the shortest distance from the side surface 60s2 are equal to each other).

Also, as shown in FIG. 8, the part 62 is a plate-like member extending in the Y direction. The rail holder 24 can be disposed on the rail 14B such that the extending direction of the rail 14B coincides with the Y direction. The part 62 can be disposed on the rail 14B such that the extending direction of the rail 14B coincides with the Y direction. The side surface 60s1 is at one end of the part 62 in the Y direction. The side surface 60s2 is at the other end of the part 62 in the Y direction. In plan view, the part 61 is disposed at a position including a center C62 of the part 62 in the Y direction.

From the viewpoint of preventing stress caused by an external force applied to the side surface 60s1 or the side surface 60s2 from being transmitted to the rail holder 24 via the part 61, it is preferable to increase the distance from the side surface 60s1 and the side surface 60s2 to the part 61. For this reason, in plan view, the part 61 is preferably disposed at a position including the center C62 of the part 62 in the Y direction.

Also, in the example shown in FIG. 8, each of the side surface 60s1 and the side surface 60s2 has an arc shape in plan view. Although not shown, as a modification of the mode shown in FIG. 8, the case where the planar shapes of the protruding portion 62P1 and the protruding portion 62P2 shown in FIG. 8 are, for example, rectangular will be considered.

As shown in FIG. 3 and FIG. 4, in the region where the rail 14B extends linearly, the pitch P is constant even if the planar shapes of the protruding portion 62P1 and the protruding portion 62P2 are rectangular. On the other hand, in the region where the rail 14 is curved, such as the region near the sprocket 17 of the inlet section 11 shown in FIG. 2, the pitch P may not be constant depending on the contact position between the protruding portion 62P1 and the protruding portion 62P2.

For example, the case where the rectangular protruding portions 62P1 and 62P2 come into contact at a position close to the clip 21 (see FIG. 3) and the case where the protruding portions 62P1 and 62P2 come into contact at a position far from the clip 21 will be compared for consideration.

When the rectangular protruding portions 62P1 and 62P2 come into contact at a position close to the clip 21 (see FIG. 3), the pitch P (see FIG. 3) becomes smaller as compared with the case where the rail 14B extends linearly.

On the other hand, when the rectangular protruding portions 62P1 and 62P2 come into contact at a position far from the clip 21 (see FIG. 3), the pitch P (see FIG. 3) becomes larger as compared with the case where the rail 14B extends linearly.

When each of the side surface 60s1 and the side surface 60s2 has an arc shape as in the example shown in FIG. 8, the protruding portion 62P1 and the protruding portion 62P2 come into contact with each other near the apex of the arc shape (the point farthest from the rail holder 24).

For this reason, it is preferable that each of the side surface 60s1 and the side surface 60s2 has an arc shape because it is possible to maintain the approximately constant pitch P (see FIG. 3) even in the region where the rail 14B is curved.

In this embodiment, as shown in FIG. 3, the clip 21 is fixed to the rail holder 24. A width W24 of the rail holder 24 to which the clip 21 is fixed is greater than a width W25 of the rail holder 25 to which the clip 21 is not fixed. The width W24 is defined as the maximum length of the rail holder 24 in the direction along the extending direction (in other words, the longitudinal direction) of the rail 14B. The width W25 is defined as the maximum length of the rail holder 25 in the direction along the extending direction (in other words, the longitudinal direction) of the rail 14A.

Since the width W24 of the rail holder 24 is greater than the width W25 of the rail holder 25, the side roller 31a and the side roller 31b can be disposed along the rail 14B. This also makes it possible to stabilize the angle formed by the rail 14B and the clip 21.

However, since the width W24 of the rail holder 24 is large, the roller holder 60 is more likely to come into contact than the roller holder 80. Therefore, in the mode of a modification in which a roller holder is provided on either the rail holder 24 or the rail holder 25, it is preferable to give priority to the structure in which the roller holder 60 is provided on the rail holder 24 shown in FIG. 8 to FIG. 10.

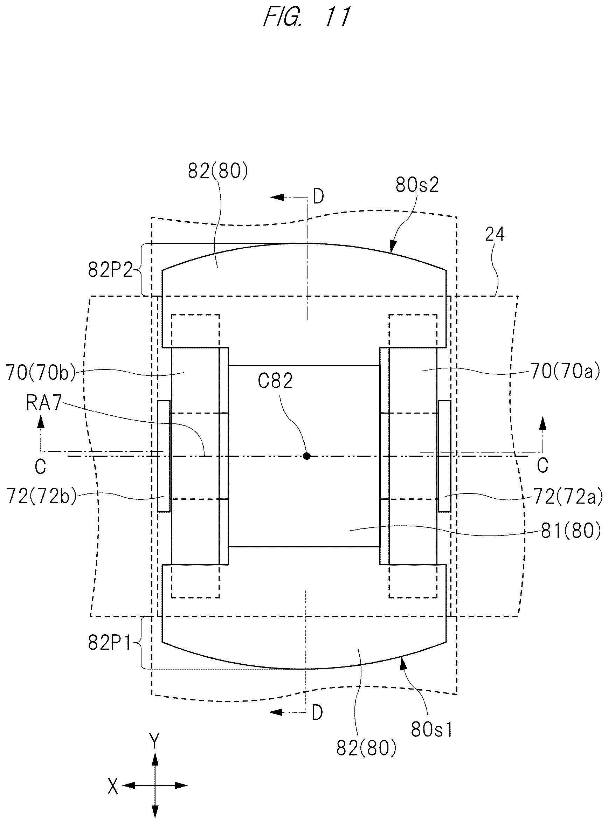

In addition, as a modification of this embodiment in which the width W25 is greater than the width W24, it is preferable to give priority to the structure in which the roller holder 80 is provided on the rail holder 25 shown in FIG. 11 to FIG. 13.

Also, in the example shown in FIG. 3, when the pitch P of the adjacent link mechanisms 20 is at its minimum, the roller holders 80 are not in contact with the adjacent roller holders 80. For this reason, as a modification of this embodiment, the roller holders 80 may have a structure different from that of the roller holders 80 (for example, a structure in which a protruding portion 82P1 and a protruding portion 82P2 shown in FIG. 11 described later are not provided).

However, from the viewpoint of reliably preventing damage to the rail holder 25, as will be described below, it is preferable that the roller holders 80 have the structure similar to that described with reference to FIG. 8 to FIG. 10. Note that the details of the upper roller 70 and the roller holder 80 will be described below, but redundant descriptions of the effects similar to those of the roller holder 60 shown in FIG. 8 and the example of heat treatment method will be omitted.

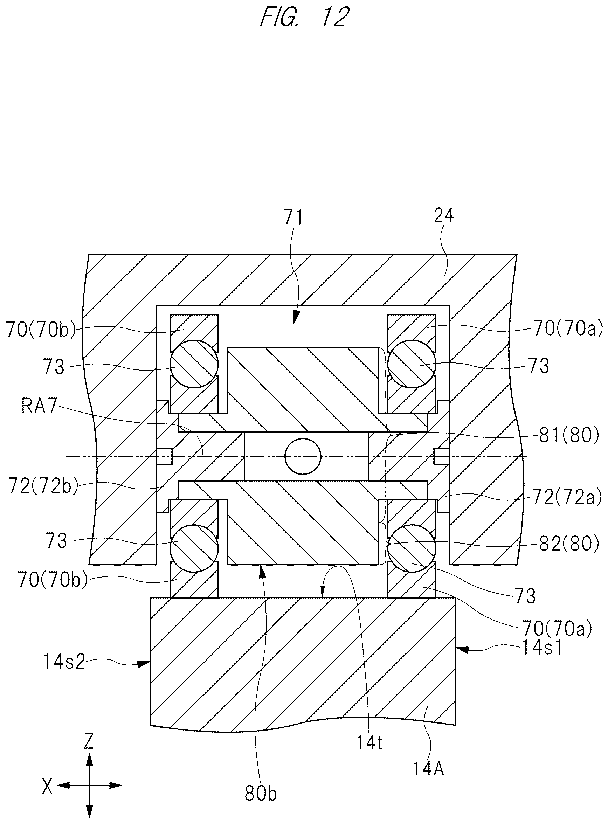

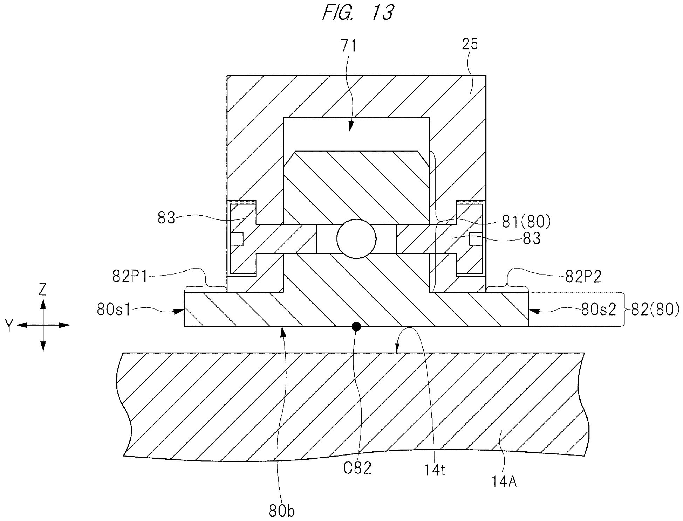

Hereinafter, the upper roller 70 and the roller holder 80 shown in FIG. 7 will be described in detail. FIG. 11 is a transparent plan view of the other of the two roller holders shown in FIG. 7 and the upper roller held by the roller holder. FIG. 12 is a cross-sectional view taken along the line A-A in FIG. 11, and FIG. 13 is a cross-sectional view taken along the line B-B in FIG. 11. The roller holder 80 shown in FIG. 11 to FIG. 13 is fixed to the rail holder 25 shown in FIG. 7. The definitions of the X direction, the Y direction, and the Z direction shown in FIG. 11 to FIG. 13 are the same as those described with reference to FIG. 8 to FIG. 10.

As shown in FIG. 12 and FIG. 13, the rail holder 25 has a roller housing portion 71, which is an opening for housing the upper roller 70. The roller housing portion 71 is an opening formed in a part of the lower surface of the rail holder 25.

The upper roller 70 is disposed in the roller housing portion 71. Also, the upper roller 70 is held by the roller holder 80 in a state where it can rotate around an axis RA7 as a rotation axis while being in contact with the upper surface 14t of the rail 14A. The axis RA7 intersects with each of the axis RA1 and the axis RA2 shown in FIG. 7. In the example shown in FIG. 12, the axis RA7 is perpendicular to each of the axis RA4 and the axis RA5 shown in FIG. 7. Further, in the example shown in FIG. 12, the axis RA7 is parallel to the upper surface 14t of the rail 14A.

In the example shown in FIG. 12, the upper roller 70 is an annular member that is in contact with the upper surface 14t of the rail 14A. A plurality of ball bearings 73 is disposed between a shaft member 72 disposed along the axis RA7 and the upper roller 70. In this embodiment, the upper roller 70 is configured to rotate smoothly by the rotation of the plurality of ball bearings 73.

The roller holder 80 is fixed to the roller housing portion 71 of the rail holder 25. In the example shown in FIG. 11 and FIG. 12, the roller holder 80 is fixed to the roller housing portion 71 via the shaft member 72 (and a bolt 83 shown in FIG. 13). Further, the roller holder 80 holds the upper roller 70 in a rotatable state.

The roller holder 80 has a through hole that extends in the X direction parallel to the axis RA7. In the example shown in FIG. 12, a part 81 has a cylindrical portion that protrudes from the side surface of the part 81 along the through hole. A part of the shaft member 72 is inserted into the cylindrical portion of the part 81.

In the example shown in FIG. 11, the upper roller 70 includes an upper roller 70a disposed on one side of the part 81 of the roller holder 80 and an upper roller 70b disposed on the other side of the part 81. In plan view, each of the upper rollers 70a and 70b is disposed between a side surface 80s1 and a side surface 80s2 of a part 82. In other words, in plan view, the upper rollers 70 are disposed on both sides of the part 81, and are disposed between the side surface 80s1 and the side surface 80s2.

Although not shown, only one upper roller 70 may be provided as a modification.

As shown in FIG. 11 to FIG. 13, the roller holder 80 has the part 81 that is housed in the roller housing portion 71 (see FIG. 12 and FIG. 13). Also, the roller holder 80 has the part 82 that has a lower surface 80b (see FIG. 12 and FIG. 13) exposed to the outside of the roller housing portion 71 and is disposed so as to face the upper surface 14t of the rail 14A (see FIG. 12 and FIG. 13).

The part 82 has the lower surface 80b (see FIG. 12 and FIG. 13) that can be positioned so as to face the upper surface 14t (see FIG. 12 and FIG. 13) of the rail 14A, the side surface 80s1 (see FIG. 11 and FIG. 13) that is continuous with the lower surface 80b, and the side surface 80s2 (see FIG. 11 and FIG. 13) that is continuous with the lower surface 80b and is located on the opposite side of the side surface 80s1.

As shown in FIG. 11, in plan view, of the part 82 of the roller holder 80, each of a protruding portion 82P1 having the side surface 80s1 and a protruding portion 82P2 having the side surface 80s2 protrudes to the outside of the rail holder 25. Each of the side surface 80s1 and the side surface 80s2 is harder than the part 81 of the roller holder 80.

As shown in FIG. 11, the roller holder 80 has the protruding portion 82P1 and the protruding portion 82P2. Therefore, if the roller holders 80 of the adjacent link mechanisms 20 come into contact with each other when the pitch P of the link mechanisms 20 shown in FIG. 3 is minimized, the protruding portion 82P1 and the protruding portion 82P2 shown in FIG. 8 come into contact with each other preferentially.

In addition, from the viewpoint of improving the durability of the roller holder 80, it is sufficient that at least the side surface 80s1 and the side surface 80s2 are hardened, but this does not exclude the areas around the side surface 80s1 and the side surface 80s2 from being hardened. For example, even when the protruding portions 82P1 and 82P2 shown in FIG. 11 or the entire surface of the part 82 are harder than the part 81, the durability of the roller holder 80 can be improved.

However, for example, it is preferable that the hardness of each of the side surface 80s1 and the side surface 80s2 is greater than the hardness of an intermediate location of the lower surface 80b (see FIG. 13) between the side surface 80s1 and the side surface 80s2 (in other words, a location where the shortest distance from the side surface 80s1 and the shortest distance from the side surface 80s2 are equal to each other).

Also, as shown in FIG. 11, the part 82 is a plate-like member extending in the Y direction. The rail holder 25 can be disposed on the rail 14A such that the extending direction of the rail 14A coincides with the Y direction. The part 82 can be disposed on the rail 14A such that the extending direction of the rail 14A coincides with the Y direction. The side surface 80s1 is at one end of the part 82 in the Y direction. The side surface 80s2 is at the other end of the part 82 in the Y direction. In plan view, the part 81 is disposed at a position including a center C82 of the part 82 in the Y direction.

As shown in FIG. 12 and FIG. 13, the part 81 is entirely housed in the roller housing portion 71. In the example shown in FIG. 13, the part 81 has a through hole and is fixed in the roller housing portion 71 by a bolt inserted into the through hole.

From the viewpoint of preventing stress caused by an external force applied to the side surface 80s1 or the side surface 80s2 from being transmitted to the rail holder 25 via the part 81, it is preferable to increase the distance from the side surface 80s1 and the side surface 80s2 to the part 81. For this reason, in plan view, the part 81 is preferably disposed at a position including the center C82 of the part 82 in the Y direction.

In addition to the above-mentioned modes, various modifications are applicable. For example, in the case of the link mechanism 20 described with reference to FIG. 3 to FIG. 7, three side rollers 30 are supported by the rail holder 24, and two side rollers are supported by the rail holder 25.

However, the number of side rollers 30 is not limited to the above, and there are various modifications. For example, two side rollers 30 may be supported by the rail holder 24, similarly to the rail holder 25 shown in FIG. 6. Alternatively, three side rollers may be supported by the rail holder 25, similarly to the rail holder 24 shown in FIG. 6.

Also, in FIG. 8 and FIG. 10, the portions of the part 62 protruding to the outside of the rail holder 24 in plan view are defined as the protruding portion 62P1 and the protruding portion 62P2. As a modification, the portions of the part 62 that are not covered by the part 61 in plan view can also be defined as the protruding portion 62P1 and the protruding portion 62P2. Similarly, in FIG. 11, the portions of the part 82 that are not covered by the part 81 in plan view can also be defined as the protruding portion 82P1 and the protruding portion 82P2.

The invention made by the inventors of this application has been specifically described above based on the embodiments and examples, but it goes without saying that the invention is not limited to the above embodiments or examples, and various modifications are possible within the range not departing from the gist of the invention.

### REFERENCE SIGNS LIST

1 thin-film manufacturing system
2 extrusion apparatus (twin-screw kneading extrusion apparatus)
2A raw material supply unit (raw material input port, hopper)
3 T-die
4 raw sheet cooling apparatus
5 stretching apparatus (simultaneous biaxial stretching apparatus)
6 take-off apparatus
7 winder apparatus
8 film
10, 10L, 10R link device
11 inlet section
12 heat treatment unit
12A, 12B, 12C region
13 outlet section
14, 14A, 14B, 14LA, 14LB, 14RA, 14RB rail
14s1, 14s2 side surface
14t upper surface
15, 15L, 15R, 16, 16L, 16R, 17, 17L, 17R sprocket
20 link mechanism
21 clip
22 upper link plate
23 lower link plate
24, 25 rail holder
26 base member
30, 31a, 31b, 32, 33, 34 side roller
40, 41 link shaft
42, 43, 44, 45, 46 roller shaft
50, 50a, 50b, 70, 70a, 70b upper roller
51, 71 roller housing portion
52, 72 shaft member
53, 73 ball bearing
60, 80 roller holder
60b, 80b lower surface
60s1, 60s2, 80s1, 80s2 side surface
61, 62, 81, 82 part
62P1, 62P2, 82P1, 82P2 protruding portion
63, 83 bolt
C62, C82 center
L1 separation distance
L2 interval (separation distance)
P pitch
RA1, RA2, RA3, RA4, RA5, RA6, RA7 axis
W24, W25 width

## Claims

1. A link mechanism for a film stretching apparatus configured to stretch a film, the link mechanism comprising:
a first rail holder disposed so as to straddle a first rail having a first rail side surface, a second rail side surface on an opposite side of the first rail side surface, and a first rail upper surface continuous with each of the first rail side surface and the second rail side surface;
a first side roller supported by the first rail holder and capable of rotating around a first axis as a rotation axis while being in contact with the first rail side surface of the first rail;
a second side roller supported by the first rail holder and capable of rotating around a second axis as a rotation axis located on an opposite side of the first axis across the first rail while being in contact with the second rail side surface of the first rail;
a first upper roller disposed in a first roller housing portion of the first rail holder and capable of rotating around a third axis as a rotation axis intersecting with each of the first axis and the second axis while being in contact with the first rail upper surface of the first rail; and
a first roller holder fixed to the first roller housing portion of the first rail holder and holding the first upper roller in a rotatable state,
wherein the first roller holder includes:
a first part housed in the first roller housing portion; and
a second part having a first lower surface exposed to outside of the first roller housing portion and disposed so as to face the first rail upper surface of the first rail,
wherein the second part includes:
the first lower surface that can be positioned so as to face the first rail upper surface of the first rail;
a first side surface continuous with the first lower surface; and
a second side surface continuous with the first lower surface and located on an opposite side of the first side surface,
wherein, in plan view, of the second part of the first roller holder, each of a first protruding portion having the first side surface and a second protruding portion having the second side surface protrudes to outside of the first rail holder, and
wherein a hardness of each of the first side surface and the second side surface is greater than a hardness of the first part of the first roller holder.

2. The link mechanism according to claim 1,
wherein the second part is a plate-like member extending in a first direction,
wherein the first rail holder can be disposed on the first rail such that an extending direction of the first rail coincides with the first direction,
wherein the first side surface is at one end of the second part in the first direction,
wherein the second side surface is at the other end of the second part in the first direction, and
wherein, in plan view, the first part is disposed at a position including a center of the second part in the first direction.

3. The link mechanism according to claim 2,
wherein, in plan view, the first upper roller includes upper rollers disposed on both sides of the first part, and is disposed between the first side surface and the second side surface.

4. The link mechanism according to claim 1,
wherein, in plan view, each of the first side surface and the second side surface has an arc shape.

5. The link mechanism according to claim 1, further comprising a clip capable of gripping the film,
wherein the clip is fixed to the first rail holder.

6. The link mechanism according to claim 5, further comprising:
a second rail holder disposed so as to straddle a second rail having a third rail side surface, a fourth rail side surface on an opposite side of the third rail side surface, and a second rail upper surface continuous with each of the third rail side surface and the fourth rail side surface;
a third side roller supported by the second rail holder and capable of rotating around a fourth axis as a rotation axis while being in contact with the third rail side surface of the second rail;
a fourth side roller supported by the second rail holder and capable of rotating around a fifth axis as a rotation axis located on an opposite side of the fourth axis across the second rail while being in contact with the fourth rail side surface of the second rail;
a second upper roller disposed in a second roller housing portion of the second rail holder and capable of rotating around a sixth axis as a rotation axis intersecting with each of the fourth axis and the fifth axis while being in contact with the second rail upper surface of the second rail; and
a second roller holder fixed to the second roller housing portion of the second rail holder and holding the second upper roller in a rotatable state,
wherein the second roller holder includes:
a third part housed in the second roller housing portion; and
a fourth part having a second lower surface exposed to outside of the second roller housing portion and disposed so as to face the second rail upper surface of the second rail,
wherein the fourth part includes:
the second lower surface that can be positioned so as to face the second rail upper surface of the second rail;
a third side surface continuous with the second lower surface; and
a fourth side surface continuous with the second lower surface and located on an opposite side of the third side surface,
wherein, in plan view, of the fourth part of the second roller holder, each of a third protruding portion having the third side surface and a fourth protruding portion having the fourth side surface protrudes to outside of the second rail holder, and
wherein a hardness of each of the third side surface and the fourth side surface is greater than a hardness of the third part of the second roller holder.

7. A film stretching apparatus configured to stretch a film, the apparatus comprising:
a pair of link devices each including a plurality of link mechanisms coupled to constitute an endless chain and capable of conveying and stretching the film; and
a first rail having a first rail side surface, a second rail side surface on an opposite side of the first rail side surface, and a first rail upper surface continuous with each of the first rail side surface and the second rail side surface, and configured to support one of the pair of link devices,
wherein each of the plurality of link mechanisms includes:
a first rail holder disposed so as to straddle the first rail;
a first side roller supported by the first rail holder and capable of rotating around a first axis as a rotation axis while being in contact with the first rail side surface of the first rail;
a second side roller supported by the first rail holder and capable of rotating around a second axis as a rotation axis located on an opposite side of the first axis across the first rail while being in contact with the second rail side surface of the first rail;
a first upper roller disposed in a first roller housing portion of the first rail holder and capable of rotating around a third axis as a rotation axis intersecting with each of the first axis and the second axis while being in contact with the first rail upper surface of the first rail; and
a first roller holder fixed to the first roller housing portion of the first rail holder and holding the first upper roller in a rotatable state,
wherein the first roller holder includes:
a first part housed in the first roller housing portion; and
a second part having a first lower surface exposed to outside of the first roller housing portion and disposed so as to face the first rail upper surface of the first rail,
wherein the second part includes:
the first lower surface that can be positioned so as to face the first rail upper surface of the first rail;
a first side surface continuous with the first lower surface; and
a second side surface continuous with the first lower surface and located on an opposite side of the first side surface,
wherein, in plan view, of the second part of the first roller holder, each of a first protruding portion having the first side surface and a second protruding portion having the second side surface protrudes to outside of the first rail holder, and
wherein a hardness of each of the first side surface and the second side surface is greater than a hardness of the first part of the first roller holder.

8. The stretching apparatus according to claim 7,
wherein the second part is a plate-like member extending in a first direction,
wherein the first rail holder can be disposed on the first rail such that an extending direction of the first rail coincides with the first direction,
wherein the first side surface is at one end of the second part in the first direction,
wherein the second side surface is at the other end of the second part in the first direction, and
wherein, in plan view, the first part is disposed at a position including a center of the second part in the first direction.

9. The stretching apparatus according to claim 8,
wherein, in plan view, the first upper roller includes upper rollers disposed on both sides of the first part, and is disposed between the first side surface and the second side surface.

10. The stretching apparatus according to claim 7,
wherein, in plan view, each of the first side surface and the second side surface has an arc shape.

11. The stretching apparatus according to claim 7, further comprising a clip capable of gripping the film,
wherein the clip is fixed to the first rail holder.

12. The stretching apparatus according to claim 11,
wherein each of the plurality of link mechanisms further includes:
a second rail holder disposed so as to straddle a second rail having a third rail side surface, a fourth rail side surface on an opposite side of the third rail side surface, and a second rail upper surface continuous with each of the third rail side surface and the fourth rail side surface;
a third side roller supported by the second rail holder and capable of rotating around a fourth axis as a rotation axis while being in contact with the third rail side surface of the second rail;
a fourth side roller supported by the second rail holder and capable of rotating around a fifth axis as a rotation axis located on an opposite side of the fourth axis across the second rail while being in contact with the fourth rail side surface of the second rail;
a second upper roller disposed in a second roller housing portion of the second rail holder and capable of rotating around a sixth axis as a rotation axis intersecting with each of the fourth axis and the fifth axis while being in contact with the second rail upper surface of the second rail; and
a second roller holder fixed to the second roller housing portion of the second rail holder and holding the second upper roller in a rotatable state,
wherein the second roller holder includes:
a third part housed in the second roller housing portion; and
a fourth part having a second lower surface exposed to outside of the second roller housing portion and disposed so as to face the second rail upper surface of the second rail,
wherein the fourth part includes:
the second lower surface that can be positioned so as to face the second rail upper surface of the second rail;
a third side surface continuous with the second lower surface; and
a fourth side surface continuous with the second lower surface and located on an opposite side of the third side surface,
wherein, in plan view, of the fourth part of the second roller holder, each of a third protruding portion having the third side surface and a fourth protruding portion having the fourth side surface protrudes to outside of the second rail holder, and
wherein a hardness of each of the third side surface and the fourth side surface is greater than a hardness of the third part of the second roller holder.

13. A roller holder for holding a roller of a link mechanism for a stretching apparatus, the roller holder comprising:
a first part to be housed in a roller housing portion of the link mechanism; and
a second part having a first lower surface exposed to outside of the roller housing portion and positioned so as to face a first rail upper surface of a first rail that supports the link mechanism,
wherein the second part includes:
the first lower surface that can be positioned so as to face the first rail upper surface of the first rail;
a first side surface continuous with the first lower surface; and
a second side surface continuous with the first lower surface and located on an opposite side of the first side surface,
wherein, in plan view, of the second part of the roller holder, each of a first protruding portion having the first side surface and a second protruding portion having the second side surface protrudes to outside of the first part, and
wherein a hardness of each of the first side surface and the second side surface is greater than a hardness of the first part of the roller holder.

14. The roller holder according to claim 13,
wherein the second part is a plate-like member extending in a first direction,
wherein the second part can be disposed on the first rail such that an extending direction of the first rail coincides with the first direction,
wherein the first side surface is at one end of the second part in the first direction,
wherein the second side surface is at the other end of the second part in the first direction, and
wherein, in plan view, the first part is disposed at a position including a center of the second part in the first direction.

15. The roller holder according to claim 13,
wherein, in plan view, each of the first side surface and the second side surface has an arc shape.
